# EUROPÄISCHE PATENTSCHRIFT

(11) **EP 3 206 864 B1**
(45) Veröffentlichungstag und Bekanntmachung des Hinweises auf die Patenterteilung: **07.07.2021**
(21) Anmeldenummer: 15753308.4
(22) Anmeldetag: 01.07.2015
(51) Int. Cl.: B29D 30/30, B65G 21/12

(54) **VORRICHTUNG UND VERFAHREN ZUR HERSTELLUNG VON REIFENROHLINGEN**
DEVICE AND METHOD FOR PRODUCING GREEN TYRES
DISPOSITIF ET PROCÉDÉ DE PRODUCTION DE PNEUS CRUS

(30) Priorität: 14.10.2014 DE 102014015490
(43) Veröffentlichungstag der Anmeldung: 23.08.2017
(73) Patentinhaber: Harburg-Freudenberger Maschinenbau GmbH, 21079 Hamburg (DE)
(72) Erfinder: BEHRENS, Achim, 21271 Asendorf (DE); KLINGER, Dieter, 21445 Wulfsen (DE)
(74) Vertreter: Klickow & Wetzel PartGmbB
(86) Internationale Anmeldenummer: PCT/DE2015/000337
(87) Internationale Veröffentlichungsnummer: WO 2016/058572

(56) Entgegenhaltungen:
- EP-A1- 0 026 315
- EP-A1- 1 785 263
- WO-A1-2007/093905
- WO-A2-2007/088455
- DE-A1- 4 232 276
- DE-A1- 19 938 151
- DE-A1-102009 025 758
- DE-A1-102011 001 559
- JP-A- 2006 062 251
- US-A- 4 769 104

## Beschreibung

Die Erfindung betrifft eine Reifenaufbaumaschine mit einer Vorrichtung zur Beschickung wenigstens einer Karkasstrommel mit Reifenkomponenten für Reifenrohlinge, aufweisend wenigstens eine in horizontaler Richtung linear bewegbare Auflegevorrichtung zur Zuführung von Materialkomponenten zu der Karkasstrommel, wobei die wenigstens eine Auflegevorrichtung derart vertikal bewegbar ist, dass zusätzlich oder alternativ zu der horizontalen Bewegung der Auflegevorrichtung eine vertikale Bewegung unterstützt und dadurch einen Lagenserver sich öffnend ausgeführt ist

Weiterhin betrifft die Erfindung ein Verfahren zur Herstellung von Reifenrohlingen unter Verwendung einer erfindungsgemäßen Reifenaufbaumaschine.

Innerhalb einer Reifenaufbaumaschine sind Lagenserver zur Beschickung wenigstens einer Karkasstrommel mit Reifenkomponenten für Reifenrohlinge vorgesehen, wobei diese wenigstens eine in horizontaler Richtung linear bewegbare Auflegevorrichtung zur Zuführung von Materialkomponenten zu einer Karkasstrommel umfasst.

Die Herstellung eines Reifens beispielsweise für Fahrzeuge wie Autos oder Motorräder ist ein extrem aufwändiger Prozess, der aus einer Vielzahl von Herstellung- und Prozessschritten besteht. Ursächlich dafür ist der komplizierte, aus einer erheblichen Zahl von verschiedenen Einzelkomponenten bestehende Reifenaufbau. Hinzu kommt, dass diese Vielzahl von Komponenten unter Druck- und Temperatureinwirkung, der sogenannten Vulkanisierung, miteinander verbunden werden müssen.

Nicht nur der fertige Reifen als Endprodukt des Reifenherstellungsprozesses, sondern bereits der Reifenrohling ist ein hochkomplexes und aus vielen Halbzeugelementen bestehendes Bauteil. Infolge des vielschichtigen Aufbaus müssen die Einzelkomponenten zunächst und vor einem Vulkanisierungsvorgang zusammengefügt werden, d.h. die Reifenkomponenten werden größenrichtig vereinzelt und lage-, positions-, orientierungsgenau einer Karkasstrommel zugeführt, die sich innerhalb einer Reifenaufbaumaschine befindet. Auf diese Weise wird der Reifenrohling hergestellt und für die spätere Vulkanisierung vorbereitet.

Viele der Reifenkomponenten liegen als bahn- und, oder bogenförmige Halbzeuge vor. Verschiedene Gummimischungen und kautschukbasierende Kompositwerkstoffe, Textilgewebe bzw. Textilkord, Stahlgürtelgewebe und kautschukummantelte Wulstkerne kommen zur Verwendung. Um diese bahn- und, oder bogenförmige Halbzeuge der Karkasstrommel zuzuführen, werden innerhalb einer Reifenaufbaumaschine teilweise Lagenserver verwendet.

Bei der Verwendung von Reifenaufbaumaschinen mit Lagenservern und Karkasstrommeln ergeben sich aufgrund der erforderlichen Bewegungskinematiken relativ zueinander erhebliche Koordinierungsprobleme. Um die einzelnen Bewegungsabläufe der Lagenserver und Karkasstrommeln räumlich realisieren zu können, sind entsprechende Aufstellungsabstände erforderlich, um Kollisionen bei den jeweiligen Linear-, Dreh- und Verfahrbewegungen vor, während und nachdem die Reifenkomponenten größenrichtig vereinzelt und lage-, positions-, orientierungsgenau der Karkasstrommel zugeführt wurden, zu vermeiden.

Die Problematik tritt vor allem dann auf, wenn Doppeltrommelkarkassmaschinen verwendet werden. Bei Doppeltrommelkarkassmaschinen handelt es sich um zwei Karkassmaschinen, die auf einem Drehtisch horizontal schwenkbar angeordnet sind. Infolge der Schwenkbewegungen ergibt sich ein zusätzlicher Raumbedarf, da der kinematische Bewegungsraum der Doppeltrommelkarkassmaschine kollisionsfrei gehalten werden muss. Durch die großen erforderlichen Aufstellungsflächen sind Anlagen dieser Art sehr kostenintensiv, zusätzlich wirken sich die Aufstellungsabstände negativ auf die Produktionsgeschwindigkeit aus.

Aus der WO 2007/088455 A2 ist bereits eine Reifenaufbaumaschine bekannt, die mit einer Vorrichtung zur Beschickung wenigstens einer Karkasstrommel versehen ist. Die erforderlichen Materialkomponenten werden von einer Auflegevorrichtung der Karkasstrommel zugeführt. Ein verwenderter Lagenserver kann geöffnet werden,

Eine ähnliche Reifenaufbaumaschine wird auch in der JP 2006 062251 A beschrieben.

Aus der WO 2007/093905 A1 ist eine weitere Reifenaufbaumaschine bekannt. Diese Reifenaufbaumaschine weist eine Doppeltrommelkarkassmaschine auf, die auf einem Drehtisch angeordnet ist. Auch bei dieser Reifenaufbaumaschine wird ein Lagenserver zur Zuführung von Materialkomponenten verwendet.

Aufgabe der Erfindung ist es, den Raumbedarf von Reifenaufbaumaschinen und damit die Investitionskosten zu reduzieren, Auch soll die Produktionsgeschwindigkeit erhöht werden. Diese Aufgabe wird durch die Merkmale der unabhängigen Ansprüche 1 und 13 gelöst.

Erfindungsgemäß werden die Einzelkomponenten einer Reifenaufbaumaschine in geeigneter Weise konfiguriert, positioniert und deren Bewegungskinematiken während des Produktionsprozesses gesteuert. Das Ziel der Erfindung liegt in einer Erhöhung der Taktrate durch die Unterstützung von kollisionsfreien Bewegungen insbesondere bei der Verwendung einer Doppeltrommelkarkassmaschine. Die Doppeltrommelkarkassmaschine und ein und mehrere Gürtelserver bzw. Lagenserver werden unmittelbar und auf engstem Raum nebeneinander angeordnet, um Bewegungswege zu minimieren und hierdurch die Taktzeiten für die Ausbringung von Reifenrohlingen zu erhöhen.

Die Anordnung erfolgt derart dicht, dass sich sowohl die Außenkonturen der beteiligten Einrichtungen als auch die Bewegungsbereiche der jeweiligen Elemente teilweise überdecken. Gemäß der vorliegenden Erfindung wird die Kinematik der beteiligten Bauelemente derart gesteuert, dass sowohl eine hohe Produktionsgeschwindigkeit als auch eine Kollisionsfreiheit gewährleistet ist.

Zur Vermeidung von Kollisionen werden die Auflegevorrichtung der Lagenserver und ggf. auch die dynamischen Schulteranroller in einer horizontalen Richtung linear bewegbar ausgeführt. Erfindungsgemäß ist zusätzlich oder alternativ vorgesehen, dass Weiter auf Seite 4 der Ursprungsunterlagen die Auflegevorrichtung vertikal linear oder schwenkend bewegbar sind, insbesondere ist vorgesehen, dass bei der Verwendung mehrerer Auflegevorrichtungen die untere Auflegevorrichtung nach unten schwenkt und dass die obere Auflegevorrichtung nach oben wegschwenkt. Hierdurch kann die Doppeltrommelkarkassmaschine bei der Materialzuführung durch die nach oben bzw. unten weggeschwenkten Bauteile hindurchdrehen.

Typischerweise werden drei oder vier Materialzuführungen verwendet. Mindestens ist vorgesehen, zwei Materialzuführungen in Form von Lagenservern einzusetzen, aber auch die Verwendung nur eines Lagenservers ist denkbar und je nach Anzahl der Halbzeugkomponenten des Reifenrohlings sinnvoll. Für jede der Materialzuführungen wird mindestens eine Auflegevorrichtung verwendet.

Eine Koordinierung der Schwenkbewegungen kann beispielsweise unter Verwendung mindestens einer Kurvenscheibe oder unter Verwendung mindestens eines Servomotors erfolgen. Die Verwendung eines Servomotors ermöglicht eine einfache Realisierung einer Positionskontrolle.

Ein besonderer Vorteil der erfindungsgemäßen Konstruktion sowie des erfindungsgemäßen Verfahrens besteht darin, dass beide Karkassmaschinen unabhängig voneinander ausrichtbar sind. Darüber hinaus können beide Karkassmaschinen einzeln und unabhängig voneinander auf eine Ausgangspositionierung, eine sog. "NullStellung", positioniert werden.

Ein guter Kompromiss zwischen einer kompakten Konstruktion und einer guten Zugänglichkeit wird dadurch erreicht, dass die beiden Karkassmaschinen mit ihren Längsachsen im Wesentlichen parallel zueinander in Längsrichtung einander teilweise überdeckend und mit ihren Karkasstrommeln ineinander entgegengesetzte Richtungen weisend angeordnet sind.

In den Zeichnungen sind Ausführungsbeispiele der Erfindung schematisch dargestellt. Es zeigen:
- Fig. 1: eine schematische Darstellung der erfindungsgemäßen Reifenaufbaumaschine (1) in einem ersten Ausführungsbeispiel in einer Draufsicht,
- Fig. 2: eine schematische Darstellung der erfindungsgemäßen Reifenaufbaumaschine (1) in einem ersten Ausführungsbeispiel in einer Vorderansicht,
- Fig. 3: eine schematische Darstellung der erfindungsgemäßen Reifenaufbaumaschine (1) in einem ersten Ausführungsbeispiel in einer Seitenansicht und
- Fig. 4: eine schematische Darstellung von zwei Karkassmaschinen, die gemeinsam auf einem Drehteller angeordnet sind, die sich mit ihren Längsachsen im Wesentlichen parallel zueinander erstrecken und mit den zugeordneten Karkasstrommeln ineinander entgegengesetzte Richtungen weisen.

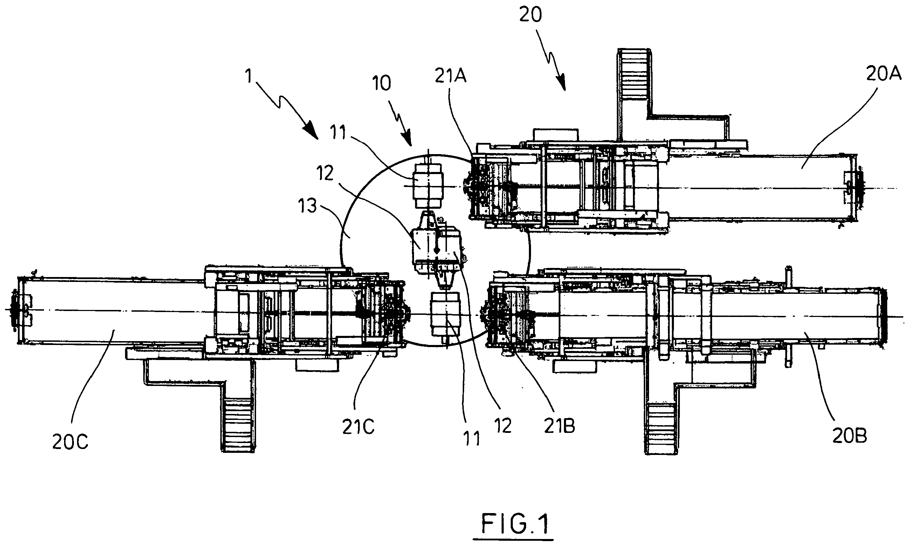

Figur 1 zeigt die schematische Darstellung der erfindungsgemäßen Reifenaufbaumaschine (1) in einem ersten Ausführungsbeispiel in einer Draufsicht. Um eine zentral angeordnete Doppeltrommelkarkassmaschine (10) sind drei Lagenserver (20A, 20B, 20C) gruppiert.

Bei der Doppeltrommelkarkassmaschine (10) handelt es sich um zwei Karkassmaschinen (12) mit zugeordneten Karkasstrommeln (11), die auf einem Drehtisch (13) um eine vertikale Achse in horizontaler Ebene schwenkbar angeordnet sind. Die Schwenkbewegung kann in jeder Position angehalten werden, insbesondere in einer oder mehrerer Beschickpositionen für die Beschickung der Doppeltrommelkarkassmaschine (10) mit Reifenkomponenten für Reifenrohlinge. An den Karkassmaschinen (12) sind die Karkasstrommeln (11) drehbar montiert.

Die drei Lagenserver (20A, 20B, 20C) sind derart relativ zu einer Beschickposition des Drehtisches (13) der Doppeltrommelkarkassmaschine (10) und der sich daraus ergebenden Drehachsenposition der Karkassmaschinen (12) angeordnet, sodass die Karkasstrommeln (11) der Karkassmaschinen (12) zeitgleich und /oder zeitversetzt mit unvulkanisiertem Gummimaterial oder anderen bahn- oder bogenförmigen Halbzeugmaterialien für die Reifenrohlingherstellung beschickt werden können.

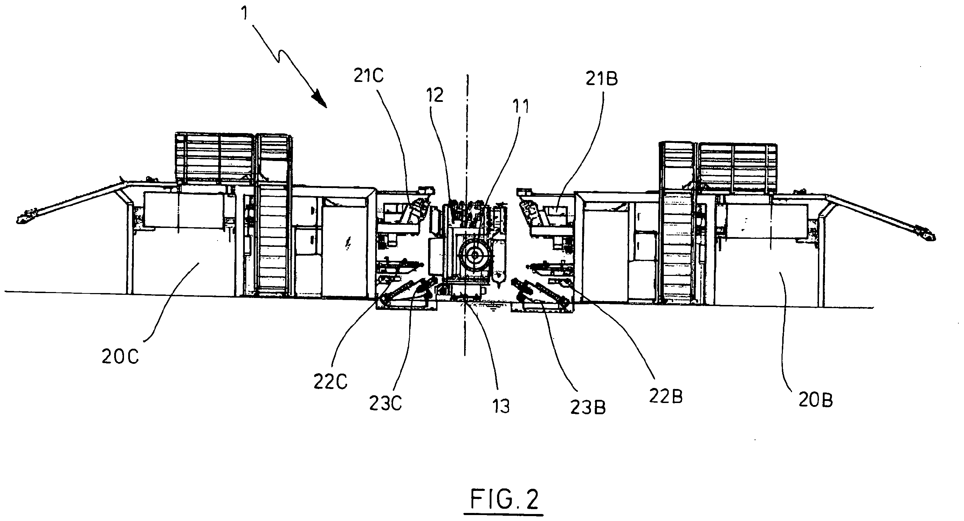

Figur 2 zeigt die schematische Darstellung der erfindungsgemäßen Reifenaufbaumaschine (1) in einem ersten Ausführungsbeispiel in einer Vorderansicht. Die Lagenserver (20A, 20B, 20C) verfügen auf ihrer der Doppeltrommelkarkassmaschine (10) zugewandten Seite über obere Auflegevorrichtungen (21A, 21B, 21C), untere Auflegevorrichtungen (22A, 22B, 22C) und dynamische Schulteranroller (23), welche unter den unteren Auflegevorrichtungen (22A, 22B, 22C) der Lagenserver (20A, 20B, 20C) angeordnet sind.

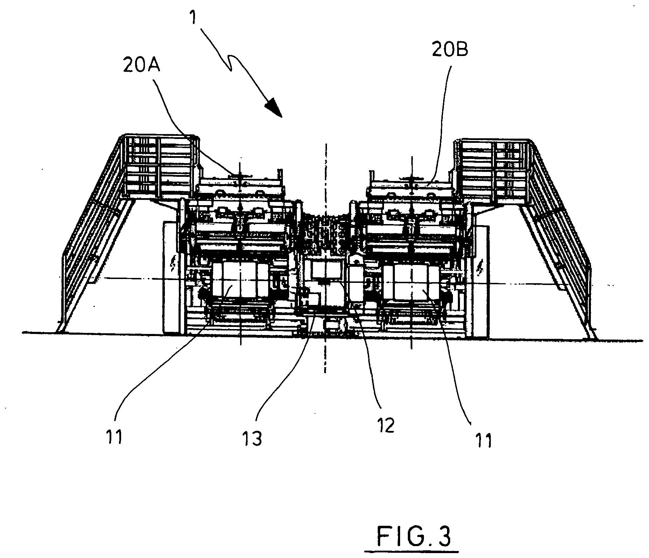

Figur 3 zeigt eine schematische Darstellung der erfindungsgemäßen Reifenaufbaumaschine (1) in einem ersten Ausführungsbeispiel in einer Seitenansicht anhand einer Schnittdarstellung entlang der Drehachsenposition der Karkassmaschinen (12) gemäß Figur 1.

Erfindungsgemäß sind die wenigstens zwei Lagenserver (20A, 20B, 20C) räumlich so dicht wie möglich an der Doppeltrommelkarkassmaschine (10) angeordnet und "öffnend" ausgeführt.

So dicht wie möglich bedeutet, dass die oberen Auflegevorrichtungen (21A, 21B, 21C), untere Auflegevorrichtungen (22A, 22B, 22C) und dynamische Schulteranroller (23) der Lagenserver (20A, 20B, 20C) wenigstens teilweise in ihrer jeweiligen Beschickposition in den kinematischen Bewegungsraum der Doppeltrommelkarkassmaschine (10) hineinragen und eine Kollisionslage einnehmen, wenn der Drehtisch (13) die Doppeltrommelkarkassmaschine (10) aus ihrer Beschickposition verschwenkt.

Mit der sich öffnenden Ausführung ist die Möglichkeit bezeichnet, die oberen Auflegevorrichtungen (21A, 21B, 21C) und, oder die unteren Auflegevorrichtungen (22A, 22B, 22C) und, oder die dynamischen Schulteranroller (23) der Lagenserver (20A, 20B, 20C) in einer horizontalen Richtung linear bewegbar und zusätzlich oder alternativ vertikal linear bewegbar und, oder verschwenkbar auszuführen, sodass die in den kinematischen Bewegungsraum der Doppeltrommelkarkassmaschine (10) hineinragenden Elemente aus deren Kollisionslage hinausbewegbar sind, wenn der Drehtisch (13) die Doppeltrommelkarkassmaschine (10) aus ihrer Beschickposition verschwenkt.

Wird eine vertikale, lineare oder schwenkende Bewegung oder Bewegungskomponente durchgeführt ist insbesondere daran gedacht, dass die unteren Auflegevorrichtungen (22A, 22B, 22C) nach unten bewegbar und das die oberen Auflegevorrichtungen (21A, 21B, 21C) nach oben bewegbar sind. Hierdurch kann die Doppeltrommelkarkassmaschine (10) in einer Produktionsphase, in der kein Halbzeugmaterial zugeführt wird in dem dann freigegebenen kinematischen Bewegungsraum frei schwenken, ohne dass es zu Kollisionen kommt.

Die sich öffnenden Lagenserver (20A, 20B, 20C) ermöglichen erfindungsgemäß deren Anordnung räumlich so dicht wie möglich an der Doppeltrommelkarkassmaschine (10) und unterstützen auf diese Weise den reduzierten Flächen- und Raumbedarf der Reifenaufbaumaschine (1) und erhöhen die Leistung durch Reduzierung der Taktzeiten und damit der Ausbringung.

Die beim Betrieb der Vorrichtung realisierte Kinematik lässt sich insbesondere bei einer Kombination der Darstellungen in Figur 1 und Figur 2 verstehen. Aus Figur 1 ist erkennbar, dass sich der Drehtisch (13) um eine vertikale Achse herum bewegt und hierdurch die auf dem Drehtisch (13) angeordneten Karkassmaschinen (12) mit ihren jeweiligen Karkasstrommeln (11) ebenfalls in einer horizontalen Richtung entlang von Kreisbahnen bewegt werden. Zur Ermöglichung eines Passierens der Karkasstrommeln (11) durch die Auflegevorrichtungen (21, 22) werden die Auflegevorrichtungen (21, 22) durch mindestens eine vertikale Bewegung geöffnet. Durch diese Öffnungsbewegung weisen die Auflegevorrichtungen (21, 22) im Bewegungsbereich der Karkasstrommeln (11) einen Abstand zueinander auf.

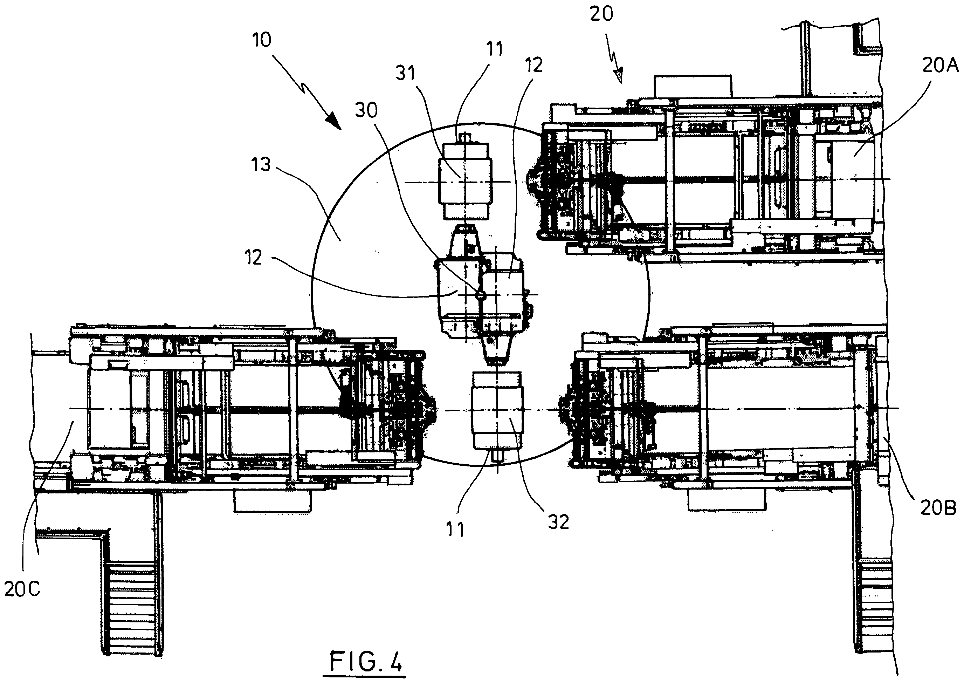

Figur 4 veranschaulicht in einer vergrößerten Ausschnittdarstellung aus Figur 1 die Anordnung der beiden Karkassmaschinen (12) auf dem Drehtisch (13). Der Drehtisch (13) besitzt die bereits erwähnte vertikale Drehachse (30).

Längsachsen (31, 32) der Karkassmaschinen (12) sind relativ zueinander und relativ zur Drehachse (30) versetzt angeordnet. In Richtung der Längsachsen (31, 32) sind die Karkassmaschinen (12) mindestens bereichsweise nebeneinander angeordnet. Die jeweiligen Karkasstrommeln (11) der Karkassmaschinen (12) weisen in einander entgegengesetzte Richtungen.

Die vorstehend beschriebene Anordnung der Karkassmaschinen (11) auf dem Drehtisch (13) kombiniert eine kompakte Anordnung mit einer guten Zugänglichkeit sowohl bei der Beschickung der Karkasstrommeln (11) als auch bei der Durchführung von Servicearbeiten.

## Patentansprüche

1. Reifenaufbaumaschine mit einer Vorrichtung zur Beschickung wenigstens einer Karkasstrommel (11) mit Reifenkomponenten für Reifenrohlinge, aufweisend wenigstens eine in horizontaler Richtung linear bewegbare Auflegevorrichtung (21, 22) zur Zuführung von Materialkomponenten zu der Karkasstrommel (11), wobei die wenigstens eine Auflegevorrichtung (21, 22) derart vertikal bewegbar ist, dass zusätzlich oder alternativ zu der horizontalen Bewegung der Auflegevorrichtung (21, 22) eine vertikale Bewegung unterstützt und dadurch ein Lagenserver (20) sich öffnend ausgeführt ist, **dadurch gekennzeichnet, dass** die wenigstens eine Auflegevorrichtung (21, 22) durch eine obere Auflegevorrichtung (21) und eine untere Auflegevorrichtung (22) gebildet ist und wobei die Reifenaufbaumaschine (1) zur Herstellung von Reifenrohlingen dient und eine auf einem Drehtisch (13) schwenkbar angeordnete Doppeltrommelkarkassmaschine (10) und wenigstens einen Lagenserver (20) für die Beschickung der Doppeltrommelkarkassmaschine (10) mit Reifenkomponenten für Reifenrohlinge aufweist, wobei der wenigstens eine Lagenserver (20) sich öffnend ausgeführt und derart angeordnet ist, dass sowohl die obere Auflegevorrichtung (21) als auch die untere Auflegevorrichtung (22) in der jeweiligen Beschickposition in den kinematischen Bewegungsraum der Doppeltrommelkarkassmaschine (10) hineinragen und dass die Doppeltrommelkarkassmaschine aus zwei Karkassmaschinen (12) mit zugeordneten Karkasstrommeln (11) ausgebildet ist, die auf dem Drehtisch (13) um eine vertikale Achse in horizontaler Ebene schwenkbar angeordnet sind und wobei die Schwenkbewegung in einer oder mehreren Beschickpositionen anhaltbar ist.

2. Reifenaufbaumaschine (20) nach Anspruch 1, **dadurch gekennzeichnet, dass** die vertikale Bewegbarkeit der wenigstens einen Auflegevorrichtung (21, 22) durch eine lineare oder schwenkende Bewegung realisierbar ist.

3. Reifenaufbaumaschine (20) nach Anspruch 1, **dadurch gekennzeichnet, dass** die Bewegbarkeit der wenigstens einen Auflegevorrichtung (21, 22) durch eine kombinierte horizontale und vertikale Bewegung realisierbar ist.

4. Reifenaufbaumaschine (20) nach Anspruch 1, **dadurch gekennzeichnet, dass** die Bewegbarkeit der wenigstens einen Auflegevorrichtung (21, 22) durch Hubzylinder, Servomotoren oder einer Kurvenscheibe realisierbar ist.

5. Reifenaufbaumaschine (20) nach Anspruch 1, **dadurch gekennzeichnet, dass** die untere Auflegevorrichtung (22) nach unten bewegbar und dass die obere Auflegevorrichtung (21) nach oben bewegbar ist.

6. Reifenaufbaumaschine (1) zur Herstellung von Reifenrohlingen nach Anspruch 1, **dadurch gekennzeichnet, dass** die Doppeltrommelkarkassmaschine (10) zwei Karkassmaschinen (12) mit jeweils einer Karkasstrommel (11) aufweist.

7. Reifenaufbaumaschine (1) zur Herstellung von Reifenrohlingen nach Anspruch 1, **dadurch gekennzeichnet, dass** drei Lagenserver (20A, 20B, 20C) beidseitig der Doppeltrommelkarkassmaschine (10) angeordnet sind.

8. Reifenaufbaumaschine (1) nach einem der Ansprüche 1 bis 7, **dadurch gekennzeichnet, dass** der wenigstens eine Lagenserver (20) sich in einer horizontalen Richtung öffnend angeordnet ist.

9. Reifenaufbaumaschine (1) nach einem der Ansprüche 1 bis 8, **dadurch gekennzeichnet, dass** die beiden Karkassmaschinen (12) der Doppelkarkassmaschine (10) mit ihren Längsachsen (31, 32) im Wesentlichen parallel zueinander auf dem Drehtisch (13) angeordnet sind.

10. Reifenaufbaumaschine (1) nach einem der Ansprüche 1 bis 9, **dadurch gekennzeichnet, dass** die Karkassmaschinen (12) in Richtung der Längsachsen (31, 32) relativ zueinander versetzt angeordnet sind.

11. Reifenaufbaumaschine (1) nach einem der Ansprüche 1 bis 10, **dadurch gekennzeichnet, dass** die Karkassmaschinen (12) mit ihren Karkasstrommeln (11) in einander entgegengesetzte Richtungen weisend angeordnet sind.

12. Reifenaufbaumaschine (1) nach einem der Ansprüche 1 bis 11, **dadurch gekennzeichnet, dass** der Drehtisch (13) eine vertikale Drehachse (30) aufweist.

13. Verfahren zur Herstellung von Reifenrohlingen mit einer Reifenaufbaumaschine (1) nach einem der Ansprüche 1 bis 12, aufweisend die Verfahrensschritte
a) Beschicken der wenigstens einen Karkasstrommel (11) der Doppeltrommelkarkassmaschine (10) mit Reifenkomponenten für Reifenrohlinge in einer ersten Beschickposition von Doppeltrommelkarkassmaschine (10) und Lagenserver (20),
b) Verschwenken der Doppeltrommelkarkassmaschine (10) aus der ersten Beschickposition in eine zweite Beschickposition,
c) Beschicken der wenigstens einen Karkasstrommel (11) der Doppeltrommelkarkassmaschine (10) mit Reifenkomponenten für Reifenrohlinge in der zweiten Beschickposition von Doppeltrommelkarkassmaschine (10) und Lagenserver (20),
**dadurch gekennzeichnet,**
**dass** sowohl die obere Auflegevorrichtung (21) als auch die untere Auflegevorrichtung (22) in einer ersten Beschickposition in den kinematischen Bewegungsraum der Doppeltrommelkarkassmaschine (10) hineinragen und diesen Bewegungsraum nach Beschickungsende freigeben, sodass die Doppeltrommelkarkassmaschine (10) aus der ersten Beschickposition in eine zweite Beschickposition verschwenkbar ist, wobei als Doppeltrommelkarkassmaschine (10) zwei Karkassmaschinen (12) mit zugeordneten Karkasstrommeln (13) verwendet werden und wobei die Karkassmaschinen (12) auf einem Drehtisch (13) um eine vertikale Drehachse in horizontaler Ebene schwenkbar angeordnet werden und wobei die Schwenkbewegung in einer oder mehreren Beschickpositionen anhaltbar ist.

14. Verfahren zur Herstellung von Reifenrohlingen nach Anspruch 13, **dadurch gekennzeichnet, dass** die wenigstens eine Auflegevorrichtung jeweils durch eine obere Auflegevorrichtung (21A, 21B, 21C) und, oder eine untere Auflegevorrichtung (22A, 22B, 22C) gebildet ist, wobei der Bewegungsraum der Doppeltrommelkarkassmaschine (10) nach Beschickungsende dadurch freigegeben wird, dass die obere Auflegevorrichtung (21A, 21B, 21C) nach oben und, oder eine untere Auflegevorrichtung (22A, 22B, 22C) nach unten bewegt wird.

15. Verfahren zur Herstellung von Reifenrohlingen nach Anspruch 13, **dadurch gekennzeichnet, dass** die wenigstens eine Auflegevorrichtung (21, 22) den Bewegungsraum der Doppeltrommelkarkassmaschine (10) nach Beschickungsende durch eine Linearbewegung in einer vertikalen Richtung freigibt.

16. Verfahren zur Herstellung von Reifenrohlingen nach Anspruch 13, **dadurch gekennzeichnet, dass** die wenigstens eine Auflegevorrichtung (21, 22) den Bewegungsraum der Doppeltrommelkarkassmaschine (10) nach Beschickungsende durch eine Schwenkbewegung in einer horizontalen oder vertikalen Richtung freigibt.

17. Verfahren zur Herstellung von Reifenrohlingen nach Anspruch 13, **dadurch gekennzeichnet, dass** die wenigstens eine Auflegevorrichtung (21, 22) den Bewegungsraum der Doppeltrommelkarkassmaschine (10) nach Beschickungsende durch eine kombinierte lineare und schwenkende Bewegung in einer horizontalen und, oder vertikalen Richtung freigibt.

18. Verfahren zur Herstellung von Reifenrohlingen nach Anspruch 13, **dadurch gekennzeichnet, dass** die Schwenkbewegung der Doppeltrommelkarkassmaschine (10) von der ersten in die zweite Beschickposition und die Bewegung zur Freigabe des kinematischen Bewegungsraumes der Doppeltrommelkarkassmaschine (10) durch die wenigstens eine Auflegevorrichtung (21, 22) teilweise zeitlich parallel erfolgt und derart koordiniert ist, das eine Kollision vermieden wird.

19. Verfahren zur Herstellung von Reifenrohlingen nach Anspruch 13, **dadurch gekennzeichnet, dass** die Verfahrensschritte a) bis c) ein- oder mehrfach wiederholt werden.

## Claims

1. Tyre building machine having a device for feeding at least one carcass drum (11) with tyre components for green tyres, said device having at least one placing device (21, 22) that for supplying material components to a carcass drum (11) is movable in a linear manner in the horizontal direction, wherein the at least one placing device (21, 22) is movable in a vertical manner such that, additionally or alternatively to the horizontal movement of the placing device (21, 22), a vertical movement of is facilitated, and on account thereof a ply server (20) is configured so as to open, **characterized in that** the at least one placing device (21, 22) is formed by an upper placing device (21) and a lower placing device (22), and wherein the tyre building machine (1) serves for producing green tyres and has a double-drum carcass machine (10) that is disposed so as to be pivotable on a rotary table (13), and at least one ply server (20) for feeding the double-drum carcass machine (10) with tyre components for green tyres, wherein the at least one ply server (20) is embodied so as to open and disposed in such a manner that the upper placing device (21) as well as the lower placing device (22) in the respective feeding position protrude into the kinematic moving space of the double-drum carcass machine (10), and **in that** the double-drum carcass machine is configured from two carcass machines (12) having assigned carcass drums (11) which are disposed on the rotary table (13) so as to be pivotable in a horizontal plane about a vertical axis, and wherein the pivoting movement is able to be stopped in one or a plurality of feeding positions.

2. Tyre building machine (20) according to Claim 1, **characterized in that** the vertical movement capability of the at least one placing device (21, 22) is implementable by a linear or pivoting movement.

3. Tyre building machine (20) according to Claim 1, **characterized in that** the movement capability of the at least one placing device (21, 22) is implementable by a combined horizontal and vertical movement.

4. Tyre building machine (20) according to Claim 1, **characterized in that** the movement capability of the at least one placing device (21, 22) is implementable by lifting cylinders, servomotors, or a rotary cam.

5. Tyre building machine (20) according to Claim 1, **characterized in that** the lower placing device (22) is movable in a downward manner, and **in that** the upper placing device (21) is movable in an upward manner.

6. Tyre building machine (1) for producing green tyres according to Claim 1, **characterized in that** the double-drum carcass machine (10) has two carcass machines (12) each having one carcass drum (11).

7. Tyre building machine (1) for producing green tyres according to Claim 1, **characterized in that** three ply servers (20A, 20B, 20C) are disposed on both sides of the double-drum carcass machine (10).

8. Tyre building machine (1) according to one of Claims 1 to 7, **characterized in that** the at least one ply server (20) is disposed so as to open in a horizontal direction.

9. Tyre building machine (1) according to one of Claims 1 to 8, **characterized in that** the two carcass machines (12) of the double carcass machine (10) by way of the longitudinal axes (31, 32) thereof are disposed on the rotary table (13) so as to be substantially mutually parallel.

10. Tyre building machine (1) according to one of Claims 1 to 9, **characterized in that** the carcass machines (12) in the direction of the longitudinal axes (31, 32) are disposed so as to be mutually offset.

11. Tyre building machine (1) according to one of Claims 1 to 10, **characterized in that** the carcass machines (12) by way of the carcass drums (11) thereof are disposed so as to point in mutually opposite directions.

12. Tyre building machine (1) according to one of Claims 1 to 11, **characterized in that** the rotary table (13) has a vertical rotation axis (30).

13. Method for producing green tyres using a tyre building machine (1) according to one of Claims 1 to 12, comprising the method steps:
a) feeding the at least one carcass drum (11) of the double-drum carcass machine (10) with tyre components for green tyres in a first feeding position of the double-drum carcass machine (10) and of the ply server (20),
b) pivoting the double-drum carcass machine (10) from the first feeding position to a second feeding position,
c) feeding the at least one carcass drum (11) of the double-drum carcass machine (10) with tyre components for green tyres in the second feeding position of the double-drum carcass machine (10) and of the ply server (20),
**characterized in that**
the upper placing device (21) as well as the lower placing device (22) in a first feeding position protrude into the kinematic moving space of the double-drum carcass machine (10) and after completion of feeding vacate this moving space such that the double-drum carcass machine (10) is pivotable from the first feeding position to a second feeding position, wherein two carcass machines (12) having assigned carcass drums (13) are used as the double-drum carcass machine (10), and wherein the carcass machines (12) are disposed on a rotary table (13) so as to be pivotable in a horizontal plane about a vertical rotation axis, and wherein the pivoting movement is able to be stopped in one or a plurality of feeding positions.

14. Method for producing green tyres according to Claim 13, **characterized in that** the at least one placing device is in each case formed by an upper placing device (21A, 21B, 21C) and/or by a lower placing device (22A, 22B, 22C), wherein the moving space of the double-drum carcass machine (10) after completion of feeding is vacated **in that** the upper placing device (21A, 21B, 21C) is moved upward and/or a lower placing device (22A, 22B, 22C) is moved downward.

15. Method for producing green tyres according to Claim 13, **characterized in that** the at least one placing device (21, 22) after completion of feeding vacates the moving space of the double-drum carcass machine (10) by a linear movement in a vertical direction.

16. Method for producing green tyres according to Claim 13, **characterized in that** the at least one placing device (21, 22) after completion of feeding vacates the moving space of the double-drum carcass machine (10) by a pivoting movement in a horizontal or vertical direction.

17. Method for producing green tyres according to Claim 13, **characterized in that** the at least one placing device (21, 22) after completion of feeding vacates the moving space of the double-drum carcass machine (10) by a combined linear and pivoting movement in a horizontal and/or vertical direction.

18. Method for producing green tyres according to Claim 13, **characterized in that** the pivoting movement of the double-drum carcass machine (10) from the first to the second feeding position and the movement for vacating the kinematic moving space of the double-drum carcass machine (10) are performed by the at least one placing device (21, 22) in a partially temporally parallel manner and is coordinated in such a manner that any collision is avoided.

19. Method for producing green tyres according to Claim 13, **characterized in that** the method steps a to c are repeated once or multiple times.

## Revendications

1. Machine de fabrication de pneus comportant un dispositif pour l'alimentation d'au moins un tambour de carcasse (11) en composants de pneus pour pneus crus, comprenant au moins un dispositif de placement (21, 22) mobile linéairement dans la direction horizontale pour l'amenée de composants de matériau jusqu'au tambour de carcasse (11), l'au moins un dispositif de placement (21, 22) étant mobile verticalement de telle sorte qu'en plus ou en variante du mouvement horizontal du dispositif de placement (21, 22), un mouvement vertical est facilité et ainsi un serveur de nappes (20) est réalisé de manière à s'ouvrir, **caractérisée en ce que** l'au moins un dispositif de placement (21, 22) est formé par un dispositif de placement supérieur (21) et un dispositif de placement inférieur (22), et la machine de fabrication de pneus (1) servant à la production de pneus crus et comprenant une machine de carcasse à double tambour (10) disposée de manière pivotante sur une table rotative (13) et au moins un serveur de nappes (20) pour l'alimentation de la machine de carcasse à double tambour (10) en composants de pneus pour pneus crus, l'au moins un serveur de nappes (20) étant réalisé de manière à s'ouvrir et étant disposé de telle sorte qu'à la fois le dispositif de placement supérieur (21) et le dispositif de placement inférieur (22) pénètrent dans l'espace de mouvement cinématique de la machine de carcasse à double tambour (10) dans la position d'alimentation respective et **en ce que** la machine de carcasse à double tambour est formée à partir de deux machines de carcasse (12) dotées de tambours de carcasse (11) associés qui sont disposés sur la table rotative (13) de manière pivotante autour d'un axe vertical dans le plan horizontal, et le mouvement de pivotement pouvant être arrêté dans une ou plusieurs positions d'alimentation.

2. Machine de fabrication de pneus (20) selon la revendication 1, **caractérisée en ce que** la mobilité verticale de l'au moins un dispositif de placement (21, 22) peut être réalisée par un mouvement linéaire ou pivotant.

3. Machine de fabrication de pneus (20) selon la revendication 1, **caractérisée en ce que** la mobilité de l'au moins un dispositif de placement (21, 22) peut être réalisée par un mouvement horizontal et vertical combiné.

4. Machine de fabrication de pneus (20) selon la revendication 1, **caractérisée en ce que** la mobilité de l'au moins un dispositif de placement (21, 22) peut être réalisée par des cylindres de levage, des servomoteurs ou un disque à came.

5. Machine de fabrication de pneus (20) selon la revendication 1, **caractérisée en ce que** le dispositif de placement inférieur (22) est mobile vers le bas et **en ce que** le dispositif de placement supérieur (21) est mobile vers le haut.

6. Machine de fabrication de pneus (1) pour la production de pneus crus selon la revendication 1, **caractérisée en ce que** la machine de carcasse à double tambour (10) comprend deux machines de carcasse (12) dotées respectivement d'un tambour de carcasse (11).

7. Machine de fabrication de pneus (1) pour la production de pneus crus selon la revendication 1, **caractérisée en ce que** trois serveurs de nappes (20A, 20B, 20C) sont disposés des deux côtés de la machine de carcasse à double tambour (10).

8. Machine de fabrication de pneus (1) selon l'une des revendications 1 à 7, **caractérisée en ce que** l'au moins un serveur de nappes (20) est disposé de manière à s'ouvrir dans une direction horizontale.

9. Machine de fabrication de pneus (1) selon l'une des revendications 1 à 8, **caractérisée en ce que** les deux machines de carcasse (12) de la machine de carcasse double (10) sont disposées avec leurs axes longitudinaux (31, 32) sensiblement parallèles l'un à l'autre sur la table rotative (13).

10. Machine de fabrication de pneus (1) selon l'une des revendications 1 à 9, **caractérisée en ce que** les machines de carcasse (12) sont disposées de manière décalée l'une par rapport à l'autre dans la direction des axes longitudinaux (31, 32).

11. Machine de fabrication de pneus (1) selon l'une des revendications 1 à 10, **caractérisée en ce que** les machines de carcasse (12) sont disposées avec leur tambours de carcasse (11) orientés dans des sens opposés l'un à l'autre.

12. Machine de fabrication de pneus (1) selon l'une des revendications 1 à 11, **caractérisée en ce que** la table rotative (13) comprend un axe de rotation vertical (30).

13. Procédé de production de pneus crus à l'aide d'une machine de fabrication de pneus (1) selon l'une des revendications 1 à 12, comprenant les étapes de procédé suivantes
a) alimentation de l'au moins un tambour de carcasse (11) de la machine de carcasse à double tambour (10) en composants de pneus pour pneus crus dans une première position d'alimentation de la machine de carcasse à double tambour (10) et du serveur de nappes (20),
b) pivotement de la machine de carcasse à double tambour (10) de la première position d'alimentation à une deuxième position d'alimentation,
c) alimentation de l'au moins un tambour de carcasse (11) de la machine de carcasse à double tambour (10) en composants de pneus pour pneus crus dans la deuxième position d'alimentation de la machine de carcasse à double tambour (10) et du serveur de nappes (20), **caractérisé en ce**
**qu'**à la fois le dispositif de placement supérieur (21) et le dispositif de placement inférieur (22) pénètrent dans l'espace de mouvement cinématique de la machine de carcasse à double tambour (10) dans une première position d'alimentation et libèrent cet espace de mouvement une fois l'alimentation terminée, de telle sorte que la machine de carcasse à double tambour (10) puisse être pivotée de la première position d'alimentation à une deuxième position d'alimentation, deux machines de carcasse (12) dotées de tambours de carcasse (13) associés étant utilisées en tant que machine de carcasse à double tambour (10), et les machines de carcasse (12) étant disposées sur une table rotative (13) de manière à pouvoir pivoter autour d'un axe de rotation vertical dans le plan horizontal, et le mouvement de pivotement pouvant être arrêté dans une ou plusieurs positions d'alimentation.

14. Procédé de production de pneus crus selon la revendication 13, **caractérisé en ce que** l'au moins un dispositif de placement est formé respectivement par un dispositif de placement supérieur (21A, 21B, 21C) et/ou un dispositif de placement inférieur (22A, 22B, 22C), l'espace de mouvement de la machine de carcasse à double tambour (10) étant libéré une fois l'alimentation terminée par le fait que le dispositif de placement supérieur (21A, 21B, 21C) est déplacé vers le haut et/ou qu'un dispositif de placement inférieur (22A, 22B, 22C) est déplacé vers le bas.

15. Procédé de production de pneus crus selon la revendication 13, **caractérisé en ce que** l'au moins un dispositif de placement (21, 22) libère l'espace de mouvement de la machine de carcasse à double tambour (10) une fois l'alimentation terminée par un mouvement linéaire dans une direction verticale.

16. Procédé de production de pneus crus selon la revendication 13, **caractérisé en ce que** l'au moins un dispositif de placement (21, 22) libère l'espace de mouvement de la machine de carcasse à double tambour (10) une fois l'alimentation terminée par un mouvement de pivotement dans une direction horizontale ou verticale.

17. Procédé de production de pneus crus selon la revendication 13, **caractérisé en ce que** l'au moins un dispositif de placement (21, 22) libère l'espace de mouvement de la machine de carcasse à double tambour (10) une fois l'alimentation terminée par un mouvement linéaire et pivotant combiné dans une direction horizontale et/ou verticale.

18. Procédé de production de pneus crus selon la revendication 13, **caractérisé en ce que** le mouvement de pivotement de la machine de carcasse à double tambour (10) de la première à la deuxième position d'alimentation et le mouvement pour la libération de l'espace de mouvement cinématique de la machine de carcasse à double tambour (10) par l'au moins un dispositif de placement (21, 22) s'effectuent partiellement en parallèle dans le temps et sont coordonnés de telle sorte qu'une collision soit empêchée.

19. Procédé de production de pneus crus selon la revendication 13, **caractérisé en ce que** les étapes de procédé a) à c) sont répétées une ou plusieurs fois.
